# FASCICULE DE BREVET EUROPEEN

(11) **EP 3 152 027 B1**
(45) Date de publication et mention de la délivrance du brevet: **13.11.2019**
(21) Numéro de dépôt: 15728060.3
(22) Date de dépôt: 19.05.2015
(51) Int. Cl.: B29C 45/16, B29L 31/32, F16H 55/06

(54) **PROCÉDÉ DE FABRICATION DE ROUE DENTÉE AVEC CERCLAGE DE RENFORT**
VERFAHREN ZUR HERSTELLUNG EINES ZAHNRADES MIT VERSTÄRKUNGSREIFEN
METHOD OF MANUFACTURING A TOOTHED WHEEL WITH REINFORCING HOOP

(30) Priorité: 03.06.2014 FR 1455005
(43) Date de publication de la demande: 12.04.2017
(73) Titulaire: JTEKT Europe, 69540 Irigny (FR)
(72) Inventeur: BROCHOT, Patrice, 69600 Oullins (FR); REY, Laurent, 69100 Villeurbanne (FR)
(74) Mandataire: Chevalier, Renaud Philippe
(86) Numéro de dépôt international: PCT/FR2015/051302
(87) Numéro de publication internationale: WO 2015/185817

(56) Documents cités:
- EP-A1- 0 267 436
- EP-A1- 2 522 480
- WO-A1-87/01168
- DE-A1-102005 010 444
- DE-A1-102006 026 568
- DE-A1-102008 045 847
- DE-A1-102012 102 778
- FR-A1- 2 385 006
- JP-A- H09 280 345
- JP-A- 2004 052 791
- US-A- 3 733 921
- US-A1- 2010 294 064
- US-A1- 2013 228 028

## Description

La présente invention concerne le domaine général de la fabrication des roues destinées à assurer la transmission d'un couple au sein d'un mécanisme, et plus particulièrement le domaine de la fabrication des roues dentées destinées aux mécanismes de type engrenages.

La présente invention concerne plus particulièrement la fabrication des roues dentées destinées aux réducteurs de direction assistée pour véhicules automobiles.

On connaît déjà, notamment par les documents DE 10 2012 102 778 et US-2010/0201030, un procédé de fabrication de roues dentées au cours duquel on place dans un moule un moyeu métallique, ainsi qu'une jante dentée en matière plastique, puis l'on relie le moyeu à la jante en formant entre eux, par moulage, un disque intermédiaire en matière plastique.

Un tel procédé peut toutefois présenter certains inconvénients.

En effet, un tel procédé impose tout d'abord de positionner très précisément la jante par rapport au moyeu, lors du moulage du disque intermédiaire. En pratique, tout défaut de positionnement des pièces, ou tout déplacement incontrôlé d'une pièce par rapport à l'autre lors du moulage, sous la pression du plastique injecté, peut conduire à un défaut de concentricité significatif des dents de la roue par rapport à l'axe de rotation de ladite roue, ce qui peut compromettre le bon fonctionnement de la roue dentée (bruit, usure...), voire provoquer sa mise immédiate au rebut.

Ensuite, du fait que le disque intermédiaire ainsi que la jante de la roue dentée sont réalisés en matières plastiques, il est difficile de conférer à ladite roue une rigidité satisfaisante.

Ainsi, la roue dentée obtenue par un tel procédé connu peut avoir tendance, lorsqu'elle est soumise à des efforts élevés, et notamment à des pressions de contact importantes avec une vis sans fin, à se déformer par écrasement, en subissant une certaine ovalisation voire un enfoncement local formant une sorte de méplat.

Bien entendu, de telles déformations, qui altèrent la circularité du diamètre primitif de la roue, peuvent perturber le bon fonctionnement de ladite roue, voire réduire significativement sa durée de vie.

Certes, on peut tenter de pallier ce manque de rigidité en augmentant les épaisseurs de matière au sein de la roue, par exemple en prévoyant un réseau particulièrement dense de nervures de renfort épaisses.

Toutefois, cet accroissement du volume de matière utilisé tend à augmenter le poids, et surtout l'encombrement de la roue, ce qui peut être incompatible avec l'implantation de ladite roue au sein d'un mécanisme soumis à des impératifs sévères de compacité.

En outre, une telle solution tend à engendrer un certain gaspillage de matière première, et peut également compliquer la réalisation du moule et/ou l'opération de moulage elle-même.

Les objets assignés à l'invention visent par conséquent à remédier aux inconvénients susmentionnés et à proposer un nouveau procédé de fabrication de roues, notamment de roues dentées, qui permette d'obtenir de façon simple et peu onéreuse des roues à la fois légères, rigides et endurantes.

Les objets assignés à l'invention sont atteints au moyen d'un procédé de fabrication de roue, ledit procédé comprenant une étape (a) de réalisation d'une âme porteuse au cours de laquelle on réalise, par injection d'un premier matériau polymère dans un premier moule, une âme porteuse qui s'étend depuis une paroi radialement interne formant un alésage d'axe directeur (XX'), correspondant à l'axe de rotation de la roue, jusqu'à un bord périphérique radialement externe, ledit procédé comprenant ensuite une étape (b) d'enrobage au cours de laquelle on réalise par surmoulage sur l'âme porteuse, dans un second matériau polymère, une couche d'enrobage afin de former une jante autour du bord périphérique, en surépaisseur radiale de la surface radialement externe dudit bord périphérique, ledit procédé étant caractérisé en ce que, lors de l'étape (a) de réalisation de l'âme porteuse, on place dans le premier moule, en position sensiblement centrée sur l'axe directeur (XX'), et avant l'injection du premier matériau, un anneau de renfort préformé, réalisé dans un troisième matériau dit « matériau de renfort » qui est distinct du premier matériau polymère et du second matériau polymère et qui présente un module d'Young supérieur à celui du premier matériau et à celui du second matériau, puis l'on noie au moins partiellement ledit anneau de renfort, lors de l'injection du premier matériau, dans la masse dudit premier matériau qui forme le bord périphérique.

Avantageusement, l'intégration à l'âme porteuse, selon l'invention, d'un anneau de renfort, intrinsèquement plus rigide que les (premier et second) matériaux constitutifs respectivement de l'âme porteuse et de la jante, permet de rigidifier et de renforcer le bord périphérique de ladite âme porteuse, et plus globalement la roue, à l'encontre de l'écrasement radial centripète.

Ledit anneau de renfort étaye en effet, à la manière d'un arceau qui forme un cerclage d'armature, le bord périphérique de l'âme porteuse et, par extension, la jante de la roue.

Avantageusement, l'implantation sous-jacente de l'anneau de renfort, dans l'épaisseur radiale de la roue, et plus particulièrement dans l'épaisseur radiale de l'âme porteuse, c'est-à-dire radialement "sous" la jante, rend le renforcement de la roue par l'anneau de renfort particulièrement compact et discret.

L'invention permet donc d'améliorer la rigidité radiale de la roue au moyen d'un anneau de renfort relativement fin, et autorise ainsi la réalisation d'une roue particulièrement légère et compacte, bien que mécaniquement très résistante.

En outre, l'implantation de l'anneau de renfort au sein de la structure de l'âme est particulièrement simple et rapide, puisqu'il suffit de rapporter l'anneau dans l'empreinte du (premier) moule.

Enfin, le renforcement de la roue étant réalisé au moyen d'un anneau de renfort de forme très simple à obtenir, la fabrication de la roue renforcée selon l'invention reste simple et peu onéreuse.

D'autres objets, caractéristiques et avantages de l'invention apparaîtront plus en détail à la lecture de la description qui suit, ainsi qu'à l'aide des dessins annexés, fournis à titre purement illustratif et non limitatif, parmi lesquels :
Les figures 1 et 2 illustrent, respectivement selon des vues d'ensemble en perspective et en perspective écorchée, un exemple de roue obtenue par un procédé de fabrication selon l'invention.
La figure 3 illustre, selon une vue partielle en coupe longitudinale, le détail de l'âme porteuse utilisée dans la roue des figures 1 et 2.
La figure 4 illustre, selon une vue en perspective, une première variante de réalisation d'anneau de renfort selon l'invention, de type couronne crénelée.
La figure 5 illustre, selon une vue en perspective, une seconde variante de réalisation d'anneau de renfort selon l'invention, de type ruban armé, avec une vue de détail de la section transverse dudit ruban armé.
La figure 6 illustre, selon une vue schématique, la mise en place de l'anneau de renfort au sein du premier moule avant l'injection du premier matériau destiné à former l'âme porteuse.

La présente invention concerne un procédé de fabrication d'une roue 1, et plus particulièrement d'une roue 1 dentée.

Ladite roue dentée 1 pourra notamment être une roue de réducteur à engrenage, et plus particulièrement, une roue de réducteur pour direction assistée.

A ce titre, la roue 1 pourra par exemple former une roue tangente destinée à être entraînée par une vis sans fin.

La roue dentée 1 pourra présenter tout type de dents d'engrènement (non représentées), par exemple formant une denture droite, une denture hélicoïdale, ou une denture en chevrons.

La roue 1 sera avantageusement fixée à une douille 2, de préférence métallique, qui permettra son montage, par exemple par frettage, sur un arbre (non représenté).

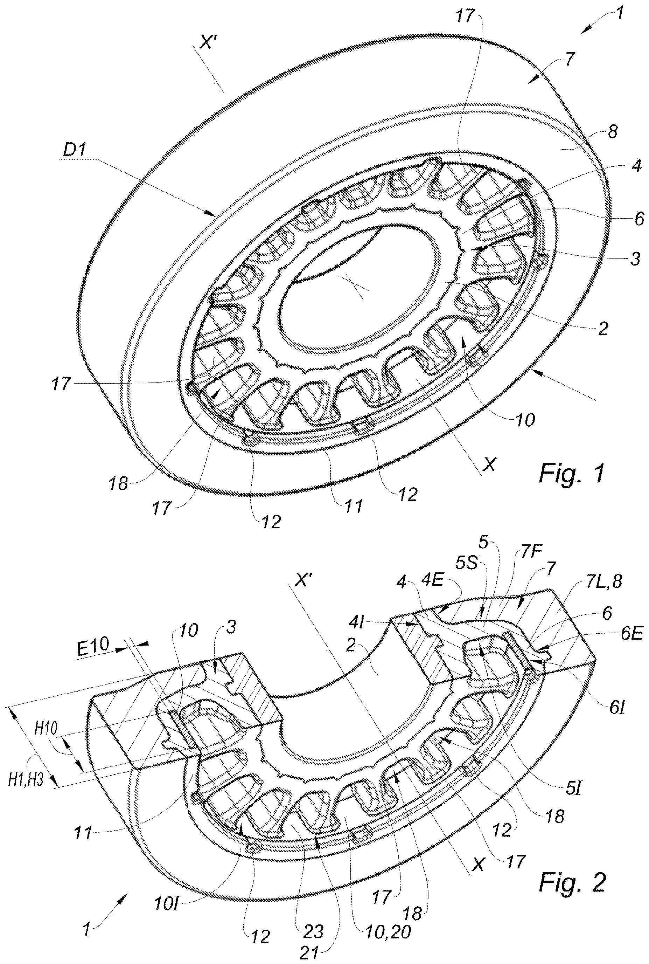

En variante, la roue 1 pourra être directement formée sur un arbre, de préférence métallique, qui matérialise l'axe de rotation de ladite roue (en pratique, il suffirait de substituer ledit arbre à la douille 2 sur les figures 1 à 3).

Quel que soit le type de montage retenu, ledit arbre pourra comprendre, de préférence à l'une de ses extrémités, un pignon lui permettant de venir en prise avec une autre pièce dentée, telle qu'une colonne de direction ou une crémaillère.

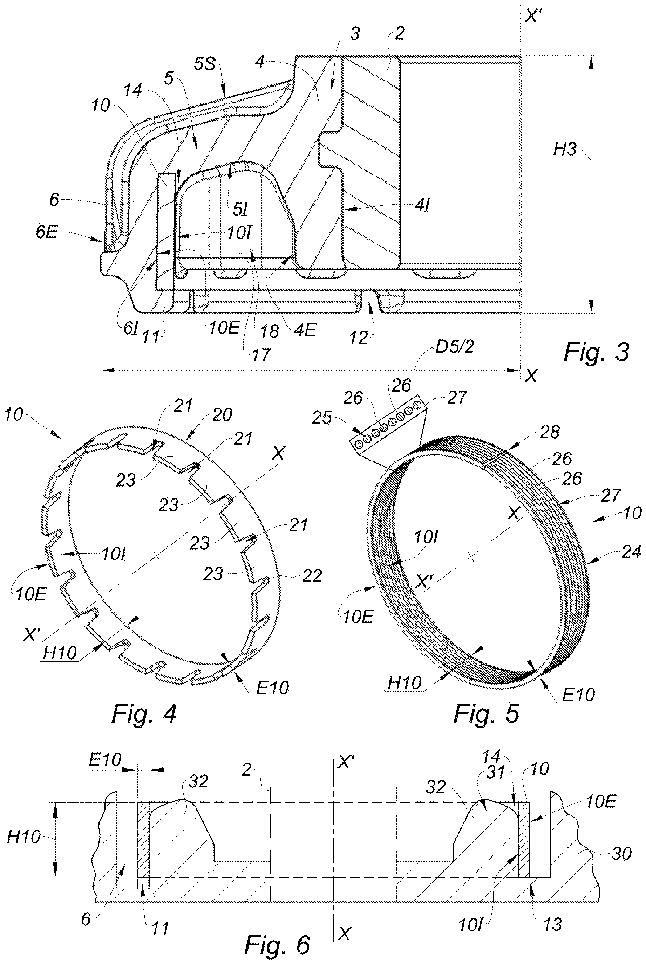

Selon l'invention, le procédé comprend une étape (a) de réalisation d'une âme porteuse 3 au cours de laquelle on réalise, par injection d'un premier matériau polymère dans un premier moule 30, une âme porteuse 3 qui s'étend depuis une paroi radialement interne 4I formant un alésage d'axe directeur (XX'), ledit axe directeur (XX') correspondant à l'axe de rotation de la roue 1, jusqu'à un bord périphérique 6 radialement externe, tel que cela est notamment visible sur les figures 2 et 3.

Pour améliorer la solidité de la roue 1 et simplifier la fabrication, ladite âme porteuse 3 sera de préférence réalisée d'un seul tenant, et plus préférentiellement surmoulée d'un seul tenant sur la douille 2, voire directement sur l'arbre (ledit arbre pouvant alors être intégré, à la manière d'un noyau, au sein du premier moule 30), la paroi interne 4I de l'alésage épousant (et plus particulièrement mouillant) la surface d'accroche radialement externe de ladite douille (respectivement dudit arbre).

L'axe directeur (XX') correspondra avantageusement à l'axe de rotation de la roue 1, commun aux différents éléments constitutifs de ladite roue 1, et sera en pratique matérialisé par l'arbre susmentionné.

Par commodité de description, on désignera par « axiale » une direction ou une dimension considérée selon ledit axe directeur (XX') ou parallèlement à ce dernier, et par « radiale » une direction ou une dimension considérée transversalement, et plus particulièrement perpendiculairement, audit axe directeur (XX').

Selon l'invention, le procédé comprend ensuite, après l'étape (a) de réalisation de l'âme porteuse 3, une étape (b) d'enrobage au cours de laquelle on réalise par surmoulage sur l'âme porteuse 3, dans un second matériau polymère, une couche d'enrobage 7 afin de former une jante 8 autour du bord périphérique 6, en surépaisseur radiale de la surface radialement externe 6E dudit bord périphérique 6, tel que cela est notamment visible sur la figure 2.

Le cas échéant, les dents d'engrènement (non représentées) pourront être formées, et plus particulièrement taillées, dans l'épaisseur radiale de ladite jante 8.

Selon un agencement préférentiel, l'âme porteuse 3 comprend un moyeu 4, qui s'étend axialement entre une (la) paroi radialement interne 4I formant l'alésage et une surface radialement externe 4E, une collerette 5 qui s'étend sensiblement radialement depuis ledit moyeu 4 (et plus particulièrement depuis la surface radialement externe 4E dudit moyeu 4 sur laquelle ladite collerette 5 prend naissance) jusqu'à un bord tombé, bord tombé qui est distinct et radialement distant de la surface radialement externe 4E du moyeu, et qui forme le bord périphérique 6 (et pourra donc être assimilé audit bord périphérique 6 dans ce qui suit, par commodité de description et de numérotation).

Tel que cela est illustré sur les figures 2 et 3, le bord tombé 6 est avantageusement venu de matière avec la collerette 5 qu'il prolonge, et est rabattu, par rapport à ladite collerette 5, vers une direction sensiblement parallèle à l'axe directeur (XX') de sorte à former un renvoi d'angle, sensiblement en « L », avec la collerette 5.

L'âme porteuse pourra ainsi présenter une forme convexe creuse, sensiblement en cloche, à la fois robuste, rigide et légère.

Tel que cela est visible sur la figure 2, la collerette 5 est délimitée axialement par une surface dite « supérieure » 5S orientée du côté axialement opposé au bord tombé 6, et par une surface dite « inférieure » 5I orientée axialement du côté du bord tombé 6, à l'opposé de la couche d'enrobage 7.

La surface inférieure 5I est de préférence destinée à rester nue, dépourvue de couche d'enrobage.

De préférence, la couche d'enrobage 7 comprend d'un seul tenant d'une part une couche frontale 7F qui recouvre la surface supérieure 5S de la collerette 5 en surépaisseur axiale de ladite collerette, et d'autre part une couche latérale 7L qui prolonge axialement ladite couche frontale 7F en recouvrant la surface radialement externe 6E du bord tombé 6, en surépaisseur radiale dudit bord tombé, de telle manière que ladite couche latérale 7L forme la jante 8 susmentionnée.

La collerette 5 (pleine) entoure de préférence le moyeu 4 sur tout le pourtour dudit moyeu, à 360 degrés autour de l'axe directeur (XX'), pour faire office de rayons de la roue, de manière à pouvoir assurer une liaison stable entre ledit moyeu 4 et la jante 8 située à la périphérie de la roue dentée 1.

A ce titre, on notera que le diamètre hors-tout D5 de la collerette 5, et plus globalement le diamètre hors-tout de l'âme porteuse 3, sera de préférence égal ou supérieur à 50%, à 60 %, voire à 75 % du diamètre hors-tout D1 de la roue 1 finie, et de préférence inférieur ou égal à 90 %, voire à 85 % dudit diamètre hors-tout D1 de la roue finie. A titre indicatif, sur la figure 2 fournie, ce rapport D5/D1 est de l'ordre de 84%.

Par ailleurs, bien que l'invention ne soit pas limitée à une roue 1 de dimensions particulières, on notera que, dans le cas notamment d'une roue 1 destinée à un réducteur de direction assistée, le diamètre hors-tout D1 de ladite roue 1 pourra être sensiblement compris entre 3 cm et 20 cm, plus particulièrement entre 5 cm et 15 cm, et de préférence égal à 10 cm.

Le moyeu 4 s'étendra de préférence axialement au-delà de l'épaisseur de la collerette 5, afin d'assurer une portée axiale suffisante de la roue 1 sur son arbre.

De préférence, par mesure de compacité, ledit moyeu 4 s'étendra au moins en partie en saillie axiale de la surface inférieure 5I, à l'intérieur du volume qui est enveloppé par la collerette 5 et par le bord tombé 6, tel que cela est notamment visible sur les figures 2 et 3.

De façon particulièrement préférentielle, le moyeu 4 s'étendra (dépassera) axialement de part et d'autre de la collerette 5, aussi bien en saillie axiale de la surface supérieure 5S que, à l'opposé, en saillie axiale de la surface inférieure 5I.

Selon l'invention, lors de l'étape (a) de réalisation de l'âme porteuse 3, on place dans le premier moule 30, en position sensiblement centrée sur l'axe directeur (XX'), et avant l'injection du premier matériau, tel que cela est schématisé sur la figure 6, un anneau de renfort 10 préformé, réalisé dans un troisième matériau dit « matériau de renfort » qui est distinct du premier matériau polymère et du second matériau polymère et qui présente un module d'Young supérieur à celui du premier matériau et à celui du second matériau, puis l'on noie au moins partiellement ledit anneau de renfort 10, lors de l'injection du premier matériau, dans la masse dudit premier matériau qui forme le bord périphérique 6.

De cette manière, en ajoutant un anneau de renfort 10 réalisé dans un matériau plus rigide que les premier et second matériaux polymères utilisés respectivement pour former l'âme porteuse 3 et la jante 8, on vient avantageusement renforcer ledit bord périphérique 6, et plus globalement la roue 1, notamment à l'encontre des efforts d'écrasement radial centripète (ce qui permet donc de réduire considérablement les déformations par enfoncement de la jante 8, et ainsi d'éviter l'ovalisation de la roue 1 ou la formation locale de méplats).

La présence d'un anneau de renfort 10 conférera également à la roue 1, le cas échéant, une meilleure stabilité dimensionnelle, notamment vis-à-vis des phénomènes de dilatation ou de contraction thermique.

Le matériau de renfort, constitutif de l'anneau de renfort 10, pourra être choisi de sorte à présenter au moins selon la direction "longitudinale" dudit anneau de renfort, c'est-à-dire selon la direction orthoradiale, tangentielle à la courbe (de préférence circulaire) selon laquelle ledit anneau de renfort 10 s'enroule autour de l'axe directeur (XX'), un module d'Young en traction supérieur à celui du premier matériau et supérieur à celui du second matériau.

Avantageusement, après avoir été préalablement mis en forme, l'anneau de renfort 10 (à l'état solide, de manière à être rigide ou semi-rigide) pourra être enfilé sur tout noyau ou empreinte 31 approprié(e) appartenant au premier moule 30, de sorte à être automatiquement centré sur l'axe directeur (XX') puis maintenu en position dans ledit premier moule 30 pendant le remplissage dudit premier moule 30 (par le premier matériau destiné à former l'âme porteuse 3), c'est-à-dire pendant la première opération de surmoulage (réalisée sur la douille 2 ou l'arbre).

De préférence, l'anneau de renfort 10 présente une section transverse dont la hauteur axiale H10 est strictement supérieure à l'épaisseur radiale E10.

Une telle configuration permettra notamment de réaliser un anneau de renfort 10 radialement compact, mais assurant néanmoins un étayage axialement étendu, au regard de la portée axiale de la roue 1, et plus particulièrement au regard de la portée axiale de la jante 8.

La section transverse de l'anneau de renfort 10 pourra bien entendu présenter toute forme appropriée.

Toutefois, de préférence, tel que cela est illustré sur les figures 2 à 6, la section transverse de l'anneau de renfort 10 sera sensiblement rectangulaire.

Une telle forme permet notamment de simplifier la fabrication dudit anneau de renfort 10 et d'en optimiser la compacité (notamment en épaisseur radiale) au regard de la robustesse souhaitée.

A titre indicatif, l'épaisseur radiale E10, par ailleurs de préférence constante sur tout le pourtour dudit anneau de renfort, pourra être comprise entre 0,1 mm et 3 mm, en fonction notamment du matériau de renfort utilisé.

La hauteur axiale H10 dudit anneau de renfort 10, par ailleurs de préférence constante sur tout le pourtour dudit anneau de renfort, pourra quant à elle être comprise entre 20 % et 75 % de la hauteur axiale H1 hors-tout de la roue 1 (ici égale à la hauteur axiale H3 de l'âme porteuse).

On notera par ailleurs que l'anneau de renfort 10 peut être (pré)formé par tout procédé approprié, et notamment par cintrage (déformation plastique) d'une bande initialement plane, par découpe d'un tronçon de tube profilé, ou bien encore par moulage (préalable à l'étape (a) de réalisation de l'âme porteuse 3).

De préférence, tel que cela est illustré sur les figures 2 et 3, l'anneau de renfort 10 est plaqué contre la surface radialement interne 6I du bord tombé 6, qui fait face à la surface radialement externe 4E du moyeu 4.

En d'autre termes, l'anneau de renfort 10 habille de préférence la paroi interne du bord tombé 6, en vis-à-vis (et à distance) de la surface radialement externe 4E du moyeu 4, sous la coupole formée par collerette 5 et ledit bord tombé 6, et à l'opposé de la jante 8, et plus globalement à l'opposé de la couche d'enrobage 7, par rapport audit bord tombé 6 (respectivement par rapport à la collerette 5).

Avantageusement, un tel agencement permet d'exploiter la structure évidée de l'âme porteuse 3 pour y loger facilement l'anneau de renfort 10.

En outre, un tel agencement facilite le surmoulage de l'anneau de renfort 10 par le premier matériau, dans la mesure où il suffit d'enfiler, avant ledit surmoulage, ledit anneau de renfort 10 de manière tangente sur le pourtour extérieur de l'empreinte 31 (mâle) du premier moule 30 qui est de forme conjuguée à celle de la surface inférieure 5I de la collerette et de la surface radialement interne 6I du bord tombé, tel que cela est illustré sur la figure 6.

On notera que le chant inférieur de l'anneau de renfort 10 pourra avantageusement être bordé, et de ce fait retenu axialement, par un rebord d'arrêt 11 rentrant (également formé dans le premier matériau, et rattaché au reste du bord tombé 6).

Ledit rebord d'arrêt 11 pourra présenter des entailles 12 réparties autour de l'axe directeur (XX') et qui correspondent aux passage de plots 13 du premier moule 30, lesdits plots 13 formant eux-mêmes des butées à l'encontre de l'enfoncement axial de l'anneau de renfort 10, pour permettre l'insertion (reproductible) et le maintien dudit anneau de renfort 10 dans une position axiale convenable (et plus globalement selon une assiette adaptée) lors du moulage de l'âme porteuse 3.

De préférence, lors de l'étape (a) de réalisation de l'âme porteuse 3, on forme, par l'injection du premier matériau, une pluralité de nervures de renfort 17 disposées selon plusieurs azimuts autour de l'axe directeur (XX') afin de renforcer localement l'épaisseur axiale de la collerette 5, lesdites nervures de renfort 17 reliant chacune la surface radialement externe 4E du moyeu 4 à la surface radialement interne 6I du bord tombé 6 ainsi qu'à la surface inférieure 5I de la collerette 5 (qui est orientée axialement du côté dudit bord tombé 6), tel que cela est visible sur les figures 1 à 3.

Ces nervures de renfort 17 contribuent à la solidité et à la rigidité de l'âme porteuse 3, et plus globalement de la roue 1, tout en préservant une structure légère, grâce à la présence d'alvéoles 18 vides entre lesdites nervures de renfort 17.

De préférence, tel que cela est illustré sur les figures 2 et 3, l'agencement de l'anneau de renfort 10 contre la surface interne 6I du bord tombé 6 permet, une fois l'empreinte 31 du moule 30 retirée, de laisser la surface radialement interne 10I de l'anneau de renfort 10 (qui forme en l'espèce l'une des deux grandes faces dudit anneau) au moins en partie apparente et ouverte sur l'intérieur de chaque alvéole 18.

De façon particulièrement préférentielle, afin d'assurer notamment sa robustesse, l'anneau de renfort 10 est formé d'un seul tenant.

Selon une possibilité de mise en oeuvre, l'anneau de renfort 10 est réalisé dans un matériau de renfort métallique, tel que l'acier.

Un tel choix permet d'obtenir un anneau de renfort 10 particulièrement rigide et résistant, même avec une faible épaisseur radiale E10 qui préserve la compacité de la roue 1.

A ce titre, l'épaisseur radiale E10 d'un anneau de renfort 10 métallique, et plus particulièrement en acier, pourra être comprise entre 0,5 mm et 3 mm.

En revanche, si l'on utilise un matériau de renfort métallique, qui présente peu d'affinité chimique avec le premier matériau polymère constituant l'âme porteuse 3, il conviendra de texturer la surface de l'anneau de renfort 10 et/ou de noyer suffisamment l'anneau de renfort 10 pour l'ancrer solidement au sein de l'âme porteuse 3, en le bloquant dans toutes les directions.

A cet effet, on pourra par exemple utiliser le rebord d'arrêt 11 décrit plus haut, qui offre une butée axiale inférieure complétant la butée axiale supérieure formé par la masse de la collerette 5, la surface interne 6I du bord tombé 6 offrant quant à elle une butée radiale externe, ainsi qu'une lèvre de retenue 14 (figure 3) qui mouille le chant supérieur de l'anneau de renfort 10 afin d'offrir une butée radiale interne, ou bien encore toute autre configuration d'immobilisation équivalente.

Selon une possibilité de mise en oeuvre, particulièrement bien adaptée (mais pas exclusivement) à l'utilisation d'un matériau de renfort métallique, et qui peut constituer une invention à part entière, l'anneau de renfort 10 se présente, tel que cela est illustré sur la figure 4, sous la forme d'une couronne crénelée 20 pourvue d'une pluralité d'encoches de passage 21 permettant aux nervures de renfort 17 (sécantes audit anneau de renfort 10) de traverser l'épaisseur radiale E10 de l'anneau de renfort 10 sans être interrompues par ledit anneau de renfort 10.

A cet effet, les encoches de passage 21 présenteront une forme sensiblement conjuguée à celle des nervures de renfort 17, et seront plus particulièrement orientées sensiblement axialement et ouvertes sur le chant axialement supérieur de l'anneau de renfort 10.

La couronne crénelée 20 présente ainsi une racine annulaire 22 (de préférence ininterrompue), qui vient de préférence en appui contre le rebord d'arrêt 11, et sur laquelle pointent axialement des languettes 23 séparées les unes des autres par les encoches de passage 21 (et dont la hauteur axiale, supérieure à celle de la racine 22, correspond à celle H10 de l'anneau de renfort 10).

Avantageusement, l'utilisation d'une couronne crénelée 20 permet d'une part de bénéficier de l'effet rigidifiant procuré par l'anneau de renfort 10, dont les languettes 23 pleines forment autant d'arches élémentaires qui tapissent et étayent chacune l'un des secteurs angulaires creux correspondant aux alvéoles 18, au dos du bord tombé 6 et de la jante 8, tout en préservant d'autre part la continuité et l'intégrité de la structure en polymère de l'âme porteuse 3, grâce aux encoches de passage 21 qui permettent à l'anneau de renfort 10 de croiser les nervures de renfort 17 en les enjambant, sans entailler, ni étrangler, ni sectionner lesdites nervures de renfort 17, et donc sans fragiliser ces dernières.

Selon une possibilité de mise en oeuvre, l'anneau de renfort 10 est formé, tel que cela est illustré sur la figure 5, par un ruban armé 24 réalisé dans un matériau de renfort composite qui comprend une armature 25 en fibres de renfort continues 26, qui s'étendent selon le périmètre de l'anneau de renfort 10, selon une direction orthoradiale à l'axe directeur (XX'), ladite armature 25 étant noyée dans une matrice 27 en matériau polymère thermoplastique.

Le ruban armé 24 pourra être réalisé par exemple par imprégnation (des fibres 26 par la matrice 27 à l'état liquide) puis calandrage.

Ledit ruban armé 24 pourra ensuite être découpé à la longueur souhaitée puis enroulé sur lui-même à chaud, avant d'être refroidi et solidifié sous sa forme définitive d'anneau 10.

L'armature 25 pourra avantageusement être formée par un faisceau ou une nappe de fibres de renfort 26 orientées parallèlement les unes aux autres, chacune décrivant, dans un plan normal à l'axe directeur (XX'), un cercle qui correspond au tracé de l'anneau de renfort 10 autour dudit axe directeur (XX').

Lesdites fibres 26 seront avantageusement continues, c'est-à-dire que chacune s'étendra d'un seul tenant, sans interruption, sur toute la longueur de l'anneau de renfort 10, c'est-à-dire sensiblement sur tout le périmètre dudit anneau de renfort 10, ce qui confèrera au ruban armé une excellente résistance à la traction (selon une direction de sollicitation orthoradiale vis-à-vis de à l'axe directeur).

Les fibres de renfort 26 pourront notamment être des fibres de verre, des fibres de carbone, des fibres d'aramide, ou bien une combinaison de deux ou trois de ces types de fibres.

La matrice 27 pourra quant à elle être par exemple réalisée en polyamide PA66.

Selon une variante préférentielle de mise en oeuvre, la matrice 27 pourra être réalisée dans un matériau qui présente une bonne affinité chimique avec le premier matériau formant l'âme porteuse 3, et par exemple dans un matériau de composition identique, ou partiellement identique, à la composition dudit premier matériau.

En particulier, la matrice 27 pourra présenter une température de transition vitreuse proche de celle du premier matériau utilisé pour former l'âme porteuse 3.

De la sorte, après avoir introduit l'anneau de renfort 10 sous forme solide dans le moule 30, on pourra, lors de l'injection du premier matériau, faire fondre partiellement (superficiellement) la matrice 27, de manière à accroître son interaction tant chimique que mécanique avec le premier matériau et, par conséquent, améliorer la qualité de la fixation de l'anneau de renfort 10 sur l'âme porteuse 3.

Ainsi, lors de l'étape (a) de réalisation de l'âme porteuse 3, on réalise de préférence une re-fusion au moins partielle de la matrice 27 de l'anneau de renfort 10, de manière à lier ladite matrice 27 d'une part avec le bord tombé 6 et d'autre part avec les nervures de renfort 17, de telle sorte que l'anneau de renfort 10 forme une interface d'adhésion qui interrompt radialement les nervures de renfort 17 (au contraire de la couronne crénelée 20 décrite plus haut) tout en assurant une liaison entre d'une part la paroi radialement interne 6I du bord tombé, à laquelle adhère la surface radialement externe 10E dudit anneau de renfort, et d'autre part lesdites nervures de renfort 17, qui adhèrent à, et prennent naissance sur, la surface radialement interne 10I de ce même anneau de renfort 10.

Selon un tel agencement, l'anneau de renfort forme une interface de séparation entre les nervures de renfort 17 et le bord tombé 6, mais sans pour autant fragiliser la structure en polymère de l'âme porteuse 3, car ledit anneau est parfaitement intégré "chimiquement" à ladite structure, en offrant une excellente cohésion de type "collage" entre les nervures de renfort 17 et le bord tombé 6, la matrice 27 assurant en quelque sorte la continuité du premier matériau entre ledit bord tombé 6 et lesdites nervures de renfort 17.

Par ailleurs, l'épaisseur E10 du ruban armé 24 composite utilisé pour former l'anneau de renfort 10 pourra être sensiblement comprise entre 0,15 mm et 3 mm.

Selon une possibilité de mise en œuvre, applicable du reste quelle que soit la composition de l'anneau de renfort 10, l'anneau de renfort 10 est fendu sur toute sa hauteur axiale H10 par une fente d'ouverture 28, tel que cela est illustré sur la figure 5, de sorte à faciliter son clippage élastique au sein du premier moule 30.

Avantageusement, la fente 28, qui peut être sensiblement parallèle à l'axe directeur (XX'), tel que cela est le cas sur la figure 5, ou bien inclinée en biais de sorte à couper l'anneau de renfort 10 en biseau, permet audit anneau de renfort 10 d'ajuster élastiquement son diamètre pour accommoder la forme du premier moule 30, et plus particulièrement de l'empreinte 31 mâle.

Ainsi, la mise en place dudit anneau de renfort 10 dans le moule 30 sera facilitée, et son maintien spontané en position pendant l'injection du premier matériau amélioré.

On notera qu'un tel agencement d'anneau de renfort 10 fendu est particulièrement bien adapté à une fabrication dudit anneau de renfort à partir d'une bandelette, et notamment d'un ruban armé 24 tel que décrit plus haut, que l'on enroulera sur elle-même pour lui conférer la courbure nécessaire et rapprocher l'une de l'autre ses deux extrémités, qui borderont alors la fente 28.

Bien entendu, à titre de variante, il est parfaitement possible d'utiliser un anneau de renfort 10 continu, non fendu, qui forme un anneau monobloc totalement fermé sur lui-même, tel que cela est illustré sur la figure 4.

Quelle que soit sa forme et son agencement, l'anneau de renfort 10 sera de préférence enfilé sur l'empreinte 31 du moule 30, tel que cela est illustré sur la figure 6, de manière à cercler par l'extérieur, à la manière d'une enveloppe tangentielle, les bossages 32 qui correspondent aux (futures) alvéoles 18, et qui sont séparés les un des autres, autour de l'axe directeur (XX') par des intervalles correspondant aux (futures) nervures de renfort 17.

On notera par ailleurs que l'on pourra employer comme premier matériau constitutif de l'âme porteuse 3, et comme second matériau constitutif de la couche d'enrobage 7, tout polymère thermoplastique approprié.

De préférence, le premier matériau, constitutif de l'âme 3, sera plus rigide que le second matériau (c'est-à-dire présentera en pratique un module d'Young supérieur).

A cet effet, le premier matériau pourra être formé par un composite renforcé par des fibres de renfort (ou par davantage de fibres, ou des fibres plus résistantes, si le second matériau est lui-même un composite).

L'utilisation d'un second matériau moins rigide (plus souple) pour former la couche d'enrobage 7 présentera plusieurs avantages.

Tout d'abord, un tel second matériau sera facile à usiner, ce qui rendra le taillage des dents d'engrènement rapide et peu coûteux.

Ensuite, une fois la roue 1 formée et mise en oeuvre au sein d'un mécanisme de transmission d'effort, et plus particulièrement d'un réducteur à vis sans fin, la relative souplesse des dents d'engrènement permettra à ces dernières d'épouser la forme des filets de la vis sans fin, ce qui augmentera le nombre de dents en prise ainsi que les surfaces de contact sous forte charge. Cette relative souplesse permettra aussi de répartir et diffuser la charge sur une portion plus étendue de l'âme porteuse 3 et ainsi d'éviter l'apparition de contraintes locales élevées, susceptibles d'être à l'origine de ruptures.

Le fonctionnement et la longévité de la roue 1 s'en trouveront ainsi améliorés.

L'utilisation d'un premier matériau plus rigide, et plus particulièrement d'un premier matériau fibré, pour former l'âme porteuse 3, contribuera avantageusement à limiter la déformation sous charge de ladite âme 3, et donc, plus globalement, de la structure de la roue 1.

L'utilisation de fibres de renfort rendra en outre ladite âme porteuse 3, et plus globalement la roue 1, moins sensible aux phénomènes de dilatation thermique, et confèrera à ladite âme porteuse 3, qui forme la portion la plus sollicitée mécaniquement de la roue 1, une meilleure résistance à la fatigue mécanique, ainsi qu'au vieillissement thermique et chimique (vis-à-vis des lubrifiants utilisés dans le mécanisme), ce qui procurera par conséquent à la roue 1 une meilleure longévité.

Par ailleurs, bien que le premier matériau et le second matériau présentent préférentiellement des compositions, et donc des propriétés mécaniques, distinctes, il posséderont de préférence une certaine affinité (compatibilité) chimique l'un envers l'autre, et le cas échéant des températures de transition vitreuse assez proches, afin de pouvoir se lier par adhérence l'un à l'autre, et plus particulièrement afin de pouvoir se fixer l'un à l'autre par re-fusion superficielle du premier matériau (de l'âme 3) lors de l'injection du second matériau (de la couche d'enrobage 7).

A titre indicatif, on pourra utiliser un premier matériau composite comprenant une matrice polymère de même composition que le second matériau mais contenant, à la différence dudit second matériau, des fibres de renfort, ou bien, si le second matériau est lui-même un composite contenant des fibres de renfort, un premier matériau contenant une plus grande concentration de fibres de renfort, ou bien des fibres de renfort d'une autre nature que celle du premier matériau.

A titre d'exemple, on pourra choisir un polyamide PA66 fibré à 50% de fibres de verre comme premier matériau, et un polyamide PA66 comme second matériau.

On notera par ailleurs que l'étape (b) d'enrobage peut s'effectuer dans un second moule (non représenté) qui réutilise au moins en partie le premier moule 30, et notamment l'empreinte 31 inférieure mâle décrite plus haut (qui permet de mouler la surface inférieure 5I concave de l'âme 3 opposée à la surface supérieure 5S), si bien que le procédé requiert un outillage relativement minime.

Un tel procédé permet en outre d'économiser de l'énergie, car le second surmoulage destiné à former la couche d'enrobage 7 peut intervenir « à chaud », sitôt que l'âme porteuse 3 est solidifiée (sur la douille 2, ou l'arbre, et sur l'anneau de renfort 10), alors que ladite âme porteuse 3, et au moins une partie du premier moule 30 (la partie réutilisée, ici l'empreinte 31), est encore chaude du premier surmoulage.

De préférence, le procédé comporte, après l'étape (b) d'enrobage, une étape (c) de taillage de dents, au cours de laquelle on taille des dents d'engrènement dans la jante 8, préférentiellement après avoir fixé la roue 1 sur son arbre.

Avantageusement, en taillant les dents d'engrènement *a posteriori,* après avoir fini de mouler la roue 1, c'est-à-dire en particulier après avoir procédé à l'ensemble des étapes de premier surmoulage (de l'âme 3 sur la douille 2, ou de préférence sur l'arbre) et de second surmoulage (de la couche d'enrobage 7 sur ladite âme 3), et alors que l'axe de rotation effectif de la roue 1 est déjà matérialisé par la douille 2 voire par l'arbre sur lequel ladite roue 1 est fixée, si bien que ladite douille 2, respectivement ledit arbre, forme une référence pour la machine de taillage, on pourra éviter tout défaut de circularité et de concentricité entre le diamètre primitif des dents obtenues par taillage et ledit axe effectif de rotation.

L'invention concerne également en tant que telle une roue dentée 1 obtenue par un procédé selon l'une et/ou l'autre des caractéristiques décrites, et présentant donc l'une ou l'autre des caractéristiques structurelles correspondantes.

L'invention concerne en outre en tant que telle l'utilisation d'un anneau de renfort 10, selon l'une ou l'autre des caractéristiques susmentionnées, pour renforcer une roue 1, notamment une roue dentée, en matériau polymère, et plus particulièrement l'utilisation d'un tel anneau de renfort 10 pour renforcer l'âme porteuse 3 d'une telle roue, en noyant ledit anneau de renfort 10 dans la masse en polymère de la roue 1.

L'invention concerne plus particulièrement l'utilisation d'un ruban armé 24 (noyé dans la masse polymère de la roue) comme anneau de renfort 10 (rigide) d'une roue 1, notamment d'une roue dentée, et plus particulièrement comme anneau de renfort de l'âme 3 et/ou de la jante 8 d'une telle roue.

L'invention porte enfin également sur un mécanisme, et notamment un réducteur de direction assistée, contenant au moins une roue 1 obtenue selon le procédé conforme à l'invention.

Bien entendu, l'invention n'est nullement limitée aux seules variantes de réalisation décrites dans ce qui précède, mais est définie par les revendications.

## Revendications

1. Procédé de fabrication d'une roue (1), ledit procédé comprenant une étape (a) de réalisation d'une âme porteuse (3) au cours de laquelle on réalise, par injection d'un premier matériau polymère dans un premier moule (30), une âme porteuse (3) qui s'étend depuis une paroi radialement interne (4I) formant un alésage d'axe directeur (XX'), correspondant à l'axe de rotation de la roue (1), jusqu'à un bord périphérique (6) radialement externe, ledit procédé comprenant ensuite une étape (b) d'enrobage au cours de laquelle on réalise par surmoulage sur l'âme porteuse (3), dans un second matériau polymère, une couche d'enrobage (7) afin de former une jante (8) autour du bord périphérique (6), en surépaisseur radiale de la surface radialement externe (6E) dudit bord périphérique (6), ledit procédé étant **caractérisé en ce que**, lors de l'étape (a) de réalisation de l'âme porteuse (3), on place dans le premier moule (30), en position sensiblement centrée sur l'axe directeur (XX'), et avant l'injection du premier matériau, un anneau de renfort (10) préformé, réalisé dans un troisième matériau dit « matériau de renfort » qui est distinct du premier matériau polymère et du second matériau polymère et qui présente un module d'Young supérieur à celui du premier matériau et à celui du second matériau, puis l'on noie au moins partiellement ledit anneau de renfort (10), lors de l'injection du premier matériau, dans la masse dudit premier matériau qui forme le bord périphérique (6).

2. Procédé selon la revendication 1 **caractérisé en ce que** l'âme porteuse (3) comprend un moyeu (4), qui s'étend axialement entre une paroi radialement interne (4I) formant l'alésage et une surface radialement externe (4E), une collerette (5) qui s'étend sensiblement radialement depuis ledit moyeu (4) jusqu'à un bord tombé, qui est distinct et radialement distant de la surface radialement externe (4E) du moyeu, et qui forme le bord périphérique (6), et **en ce que** l'anneau de renfort (10) est plaqué contre la surface radialement interne (6I) du bord tombé (6), qui fait face à la surface radialement externe (4E) du moyeu (4).

3. Procédé selon la revendication 2 **caractérisé en ce que**, lors de l'étape (a) de réalisation de l'âme porteuse, on forme, par l'injection du premier matériau, une pluralité de nervures de renfort (17) disposées selon plusieurs azimuts autour de l'axe directeur (XX') afin de renforcer localement l'épaisseur axiale de la collerette (5), lesdites nervures de renfort (17) reliant chacune la surface radialement externe (4E) du moyeu (4) à la surface radialement interne (6I) du bord tombé (6) ainsi qu'à la surface inférieure (5I) de la collerette (5), qui est orientée axialement du côté dudit bord tombé (6).

4. Procédé selon l'une des revendications précédentes **caractérisé en ce que** l'anneau de renfort (10) est réalisé dans un matériau de renfort métallique, tel que l'acier.

5. Procédé selon les revendications 3 et 4 **caractérisé en ce que** l'anneau de renfort (10) se présente sous la forme d'une couronne crénelée (20) pourvue d'une pluralité d'encoches de passage (21) permettant aux nervures de renfort (17) de traverser l'épaisseur radiale (E10) de l'anneau de renfort (10) sans être interrompues par ledit anneau de renfort.

6. Procédé selon l'une des revendications 1 à 3 **caractérisé en ce que** l'anneau de renfort (10) est formé par un ruban armé (24) réalisé dans un matériau de renfort composite qui comprend une armature (25) en fibres de renfort continues (26), par exemple des fibres de verre, des fibres de carbone, des fibres d'aramide, ou bien une combinaison de deux ou trois de ces types de fibres, qui s'étendent selon le périmètre de l'anneau de renfort (10), selon une direction orthoradiale à l'axe directeur (XX'), ladite armature (25) étant noyée dans une matrice (27) en matériau polymère thermoplastique.

7. Procédé selon les revendications 3 et 6 **caractérisé en ce que**, lors de l'étape (a) de réalisation de l'âme porteuse, on réalise une re-fusion au moins partielle de la matrice (27) de l'anneau de renfort (10), de manière à lier ladite matrice (27) d'une part avec le bord tombé (6) et d'autre part avec les nervures de renfort (17), de telle sorte que l'anneau de renfort (10) forme une interface d'adhésion qui interrompt radialement les nervures de renfort (17) tout en assurant une liaison entre d'une part la paroi radialement interne (6I) du bord tombé, à laquelle adhère la surface radialement externe (10E) dudit anneau de renfort, et d'autre part lesdites nervures de renfort (17), qui adhèrent à et prennent naissance sur la surface radialement interne (10I) de ce même anneau de renfort.

8. Procédé selon l'une des revendications précédentes **caractérisé en ce que** l'anneau de renfort (10) présente une section transverse, de préférence sensiblement rectangulaire, dont la hauteur axiale (H10) est strictement supérieure à l'épaisseur radiale (E10), elle-même de préférence constante sur tout le pourtour dudit anneau de renfort.

9. Procédé selon l'une des revendications précédentes **caractérisé en ce que** l'anneau de renfort (10) est fendu sur toute sa hauteur axiale (H10) par une fente d'ouverture (28) de sorte à faciliter son clippage élastique au sein du premier moule (30).

10. Procédé selon l'une des revendications précédentes **caractérisé en ce qu'**il comporte, après l'étape (b) d'enrobage, une étape (c) de taillage de dents, au cours de laquelle on taille des dents d'engrènement dans la jante (8), de préférence après avoir fixé la roue (1) sur son arbre.

## Patentansprüche

1. Verfahren zur Fertigung eines Rades (1), wobei das Verfahren einen Schritt (a) zur Herstellung eines Tragestegs (3) umfasst, im Laufe dessen man durch Injektion eines ersten Polymermaterials in eine erste Form (30) einen Tragesteg (3) herstellt, der sich von einer radial innen liegenden Wand (4I), die eine Bohrung mit einer Leitachse (XX') bildet, die der Drehachse des Rades (1) entspricht, bis zu einem radial außen liegenden umlaufenden Rand (6) erstreckt, wobei das Verfahren danach einen Schritt (b) zur Ummantelung umfasst, im Laufe dessen man durch Überformung auf dem Tragesteg (3) aus einem zweiten Polymermaterial eine Ummantelungsschicht (7) herstellt, um einen Radkranz (8) um den umlaufenden Rand (6) als radiales Aufmaß der radial außen liegenden Oberfläche (6E) des umlaufenden Randes (6) zu bilden, wobei das Verfahren **dadurch gekennzeichnet ist, dass** beim Schritt (a) zur Herstellung eines Tragestegs (3) in einer im Wesentlichen auf der Leitachse (XX') zentrierten Position und vor der Injektion des ersten Materials ein vorgebildeter Verstärkungsring (10) in die erste Form (30) platziert wird, der aus einem dritten, "Verstärkungsmaterial" genannten Material hergestellt ist, das sich von dem ersten Polymermaterial und von dem zweiten Polymermaterial unterscheidet, und das ein Elastizitätsmodul aufweist, das größer ist, als jenes des ersten Materials und als jenes des zweiten Materials, der Verstärkungsring (10) anschließend bei der Injektion des ersten Materials mindestens teilweise in die Masse des ersten Materials, das den umlaufenden Rand (6) bildet, eingetaucht wird.

2. Verfahren nach Anspruch 1, **dadurch gekennzeichnet, dass** der Tragesteg (3) eine Nabe (4) umfasst, die sich axial zwischen einer radial innen liegenden Wand (4I), die die Bohrung bildet, und einer radial außen liegenden Oberfläche (4E) erstreckt, einen Sattel (5), der sich im Wesentlichen radial aus der Nabe (4) bis zu einem Randflansch erstreckt, der sich von der radial außen liegenden Oberfläche (4E) unterscheidet und davon radial beabstandet ist, und der den umlaufenden Rand (6) bildet, und dadurch, dass der Verstärkungsring (10) an der radial innen liegenden Oberfläche (6I) des Randflansches (6) angelegt ist, die gegenüber der radial außen liegenden Oberfläche (4E) der Nabe (4) liegt.

3. Verfahren nach Anspruch 2, **dadurch gekennzeichnet, dass** beim Schritt (a) zur Herstellung des Tragestegs durch Injektion des ersten Materials eine Vielzahl von Verstärkungsrippen (17) gebildet wird, die in mehrere Azimute um die Leitachse (XX') angeordnet sind, um die axiale Dicke des Sattels (5) lokal zu verstärken, wobei die Verstärkungsrippen (17) jeweils die radial außen liegende Oberfläche (4E) der Nabe (4) mit der radial innen liegenden Oberfläche (6I) des Randflansches (6), sowie mit einer innen liegenden Oberfläche (5I) des Sattels (5) verbinden, die auf Seiten des Randflansches (6) axial ausgerichtet ist.

4. Verfahren nach einem der vorstehenden Ansprüche, **dadurch gekennzeichnet, dass** der Verstärkungsring (10) aus einem metallischen Verstärkungsmaterial, wie Stahl ausgeführt ist.

5. Verfahren nach den Ansprüchen 3 und 4, **dadurch gekennzeichnet, dass** sich der Verstärkungsring (10) in der Form eines verzahnten Zwischenringes (20) darstellt, der mit einer Vielzahl von Durchgangskerben (21) versehen ist, die es den Verstärkungsrippen (17) erlauben, die radiale Dicke (E10) des Verstärkungsringes (10) zu durchqueren, ohne durch den Verstärkungsring unterbrochen zu werden.

6. Verfahren nach einem der Ansprüche 1 bis 3, **dadurch gekennzeichnet, dass** der Verstärkungsring (10) durch ein bewehrtes Band (24) gebildet ist, das aus einem Verbundverstärkungsmaterial ausgeführt ist, das eine Bewehrung (25) aus durchgängigen Verstärkungsfasern (26), beispielsweise Glasfasern, Carbonfasern, Aramidfasern oder eine Kombination von zwei oder drei solcher Fasertypen umfasst, die sich über den Umfang des Verstärkungsringes (10) in eine orthoradiale Richtung zur Leitachse (XX') erstrecken, wobei die Bewehrung (25) in eine Matrix (27) aus thermoplastischem Polymermaterial eingetaucht ist.

7. Verfahren nach den Ansprüchen 3 und 6, **dadurch gekennzeichnet, dass** beim Schritt (a) zur Herstellung des Tragestegs eine mindestens teilweise Neuverschmelzung der Matrix (27) des Verstärkungsringes (10) durchgeführt wird, um die Matrix (27) einerseits mit dem Randflansch (6), und andererseits mit den Verstärkungsrippen (17) zu verbinden, sodass der Verstärkungsring (10) eine Haftschnittstelle bildet, die die Verstärkungsrippen (17) radial unterbricht, und dabei für eine Verbindung zwischen einerseits der radial innen liegenden Oberfläche (6I) des Randflansches, an der die radial außen liegende Oberfläche (10E) des Verstärkungsringes anhaftet, und andererseits den Verstärkungsrippen (17) sorgt, die an der radial innen liegenden Oberfläche (101) dieses selben Verstärkungsringes anhaften und daraus hervorgehen.

8. Verfahren nach einem der vorstehenden Ansprüche, **dadurch gekennzeichnet, dass** der Verstärkungsring (10) einen vorzugsweise im Wesentlichen rechteckigen Querschnitt aufweist, dessen axiale Höhe (H10) absolut größer als die radiale Dicke (E10) ist, die selbst vorzugsweise über den gesamten Umfang des Verstärkungsringes hinweg konstant ist.

9. Verfahren nach einem der vorstehenden Ansprüche, **dadurch gekennzeichnet, dass** der Verstärkungsring (10) über seine gesamte axiale Höhe (H10) durch einen Öffnungsspalt (28) gespalten ist, um dessen elastisches Einrasten innerhalb der ersten Form (30) zu erleichtern.

10. Verfahren nach einem der vorstehenden Ansprüche, **dadurch gekennzeichnet, dass** es nach dem Schritt (b) zum Ummanteln einen Schritt (c) zum Walzfräsen von Zähnen beinhaltet, im Laufe dessen Eingriffszähne in den Radkranz (8), vorzugsweise, nachdem das Rad (1) auf seiner Welle fixiert worden ist, gefräst werden.

## Claims

1. A method for manufacturing a wheel (1), said method comprising a step (a) of producing a carrier core (3) during which is produced, by injection of a first polymer material in a first mold (30), a carrier core (3) which extends from a radially inner wall (41) forming a bore having a steering axis (XX'), corresponding to the axis of rotation of the wheel (1), up to a radially outer peripheral edge (6), said method then comprising a coating step (b) during which is produced, by overmolding operation on the carrier core (3), in a second polymer material, a coating layer (7) in order to form a rim (8) about the peripheral edge (6), in the radial over-thickness of the radially outer surface (6E) of said peripheral edge (6), said method being **characterized in that**, during step (a) of producing the carrier core (3), is placed in the first mold (30), in the position substantially centered on the steering axis (XX'), and before the injection of the first material, a preformed reinforcing ring (10), made of a third material called "reinforcing material" which is distinct from the first polymer material and from the second polymer material and which has a Young's modulus greater than that of the first material and than that of the second material, then is embedded, at least partially, said reinforcing ring (10), while injecting the first material, in the mass of said first material which forms the peripheral edge (6).

2. The method according to claim 1, **characterized in that** the carrier core (3) comprises a hub (4), which extends axially between a radially inner wall (41) forming the bore and a radially outer surface (4E), a flange (5) which extends substantially radially from said hub (4) up to a flanged edge, which is distinct and radially spaced from the radially outer surface (4E) of the hub, and which forms the peripheral edge (6), and **in that** the reinforcing ring (10) is pressed against the radially inner surface (61) of the flanged edge (6), which faces the radially outer surface (4E) of the hub (4).

3. The method according to claim 2, **characterized in that**, during step (a) of producing the carrier core, is formed, by injection of the first material, a plurality of reinforcing ribs (17) disposed according to a plurality of azimuths about the steering axis (XX') in order to locally reinforce the axial thickness of the flange (5), said reinforcing ribs (17) each connecting the radially outer surface (4E) of the hub (4) to the radially inner surface (61) of the flanged edge (6) as well as to the lower surface (51) of the flange (5), which is axially oriented on the side of said flanged edge (6).

4. The method according to any of the preceding claims, **characterized in that** the reinforcing ring (10) is made of a metal reinforcing material such as the steel.

5. The method according to claims 3 and 4, **characterized in that** the reinforcing ring (10) is in the form of a serrated crown (20) provided with a plurality of passage slots (21) allowing the reinforcing ribs (17) to pass through the radial thickness (E10) of the reinforcing ring (10) without being interrupted by said reinforcing ring.

6. The method according to any of claims 1 to 3, **characterized in that** the reinforcing ring (10) is formed by an armed tape (24) made in a composite reinforcing material which comprises a frame (25) in continuous reinforcing fibers (26), for example glass fibers, carbon fibers, aramid fibers, or a combination of two or three of these types of fibers, which extend according to the perimeter of the reinforcing ring (10), according to a direction orthoradial to the steering axis (XX), said frame (25) being embedded in a matrix (27) made of thermoplastic polymer material.

7. The method according to claims 3 and 6, **characterized in that**, during step (a) of producing the carrier core 3, an at least partial re-fusion of the matrix (27) of the reinforcing ring (10) is preferably carried out, so as to connect said matrix (27), on the one hand, with the flanged edge (6) and, on the other, with the reinforcing ribs (17), so that the reinforcing ring (10) forms an adhesion interface which radially interrupts the reinforcing ribs (17) while ensuring a connection between, on the one hand, the radially inner wall (61) of the flanged edge, to which adheres the radially outer surface (10E) of said reinforcing ring and, on the other hand, said reinforcing ribs (17), which adhere to, and start on, the radially inner surface (101) of the same reinforcing ring.

8. The method according to any of the preceding claims, **characterized in that** the reinforcing ring (10) has a preferably substantially rectangular, transverse section, whose axial height (H10) is strictly greater than the radial thickness (E10), itself preferably constant over the entire circumference of said reinforcing ring.

9. The method according to any of the preceding claims, **characterized in that** the reinforcing ring (10) is split along its entire axial height (H10) by an opening gap (28) so as to facilitate its elastic clipping within the first mold (30).

10. The method according to any of the preceding claims, **characterized in that** it includes, after the coating step (b), a step (c) of cutting teeth, during which meshing teeth are cut in the rim (8), preferably after having fixed the wheel (1) on its shaft.
